# EUROPÄISCHE PATENTANMELDUNG

(11) **EP 0 869 307 A1**
(43) Veröffentlichungstag der Anmeldung: **07.10.1998**
(21) Anmeldenummer: 97119602.7
(22) Anmeldetag: 08.11.1997
(51) Int. Cl.: F16L 39/02, F16L 37/56

(54) **Anschlussarmatur für eine Druckluftturbine**

(30) Priorität: 05.04.1997 DE 29706092 U
(71) Anmelder: Joisten & Kettenbaum GmbH & Co. KG, 51429 Bergisch Gladbach (DE)
(72) Erfinder: Trojahn, Hans Werner, D-51469 Bergisch Gladbach (DE)
(74) Vertreter: Patentanwälte Dr. Solf & Zapf

(57) **Zusammenfassung**

Die Erfindung betrifft eine Anschlußarmatur (1) für Versorgungsleitungen einer - insbesondere als Rotationsantrieb für Werkzeugmaschinen (4) vorgesehenen - Druckluftturbine (2), bestehend aus einem Druckluftleitungen und vorzugsweise elektrische Verbindungsleitungen enthaltenden Schlauch (10) und einem mit diesem endseitig verbundenen Kupplungssteckerteil (12). Das Kupplungssteckerteil (12) weist zur Verbesserung der Druck-Dichtigkeit der Anschlußarmatur mindestens einen Druckluftstecker mit zwei axial, in Steckrichtung beabstandeten, im Bereich einer vorgegebenen Kupplungstiefe des Druckluftsteckers angeordneten Umfangsdichtungen auf.

## Beschreibung

Die vorliegende Erfindung betrifft eine Anschlußarmatur für Versorgungsleitungen einer - insbesondere als Rotationsantrieb für Werkzeugmaschinen vorgesehenen - Druckluftturbine, bestehend aus einem Druckluftleitungen und vorzugsweise elektrische Verbindungsleitungen enthaltenden Schlauch und einem mit diesem endseitig verbundenen Kupplungssteckerteil.

Es ist bekannt, bei Werkzeugmaschinen zum Rotationsantrieb insbesondere von zu bearbeitenden Werkstücken Druckluftturbinen einzusetzen, und zwar vor allem dann, wenn hohe Drehzahlen von beispielsweise bis zu 80.000 Umdrehungen pro Minute gewünscht sind. Hierzu wird dann die Druckluftturbine in die vorhandene Werkzeugaufnahme der Maschine eingesetzt, und das Werkzeug wird in einer Spanneinrichtung der Turbine eingespannt. Die Turbine wird über eine Anschlußarmatur der eingangs genannten Art mit der Werkzeugmaschine verbunden. Dabei hat sich in der Praxis gezeigt, daß es häufig zu Luft-Leckagen im Bereich des Kupplungssteckerteils kommt.

Der Erfindung liegt die Aufgabe zugrunde, die Anschlußarmatur bezüglich ihrer Druck-Dichtigkeit zu verbessern.

Erfindungsgemäß wird dies dadurch erreicht, daß das Kupplungssteckerteil mindestens einen Druckluftstecker mit zwei axial, in Steckrichtung beabstandeten, im Bereich einer vorgegebenen Kupplungstiefe des Druckluftsteckers angeordneten Umfangsdichtungen aufweist. Durch die erfindungsgemäß vorgesehenen zwei Umfangsdichtungen des Druckluftsteckers wird zunächst eine Verbesserung der Dichtigkeit dadurch erreicht, daß eventuelle Fluchtungsungenauigkeiten zwischen dem Stecker und der zugehörigen Stecköffnung eines Gegenkupplungsteils ausgeglichen werden. Zudem ist die Dichtigkeit vorteilhafterweise auch sehr viel unabhängiger von der Einstecktiefe, was vor allem für ein automatisches, maschinelles Kuppeln wichtig ist.

Durch die Erfindung ergibt sich zudem die vorteilhafte Ausgestaltungsmöglichkeit, die Dichtwirkung noch entscheidend dadurch zu erhöhen, daR von einem durch den Druckluftstecker verlaufenden Druckluftkanal ausgehend mindestens ein Querkanal abzweigt und dieser Querkanal axial zwischen den beiden Umfangsdichtungen am Außenumfang des Druckluftsteckers mündet. Hierdurch wird erreicht, daß bei Beaufschlagung der Kupplungsverbindung mit Systemdruck dieser Druck auch im axial zwischen den beiden Umfangsdichtungen liegenden Bereich des Ringspaltes zwischen dem Druckluftstecker und der zugehörigen Stecköffnung wirkt, wodurch die Dichtungen radial mehr verspannt werden. Es wird somit vorteilhafterweise eine druckabhängige Dichtwirkung derart erreicht, daß bei steigendem Systemdruck auch die Dichtwirkung entsprechend gesteigert wird.

Weitere vorteilhafte Ausgestaltungsmerkmale der Erfindung sind in den Unteransprüchen sowie der folgenden Beschreibung enthalten.

Anhand eines in der Zeichnung veranschaulichten, bevorzugten Ausführungsbeispiels soll im folgenden die Erfindung näher erläutert werden. Dabei zeigen:
- Fig. 1: eine schematische Draufsicht einer Druckluftturbine, die über eine erfindungsgemäße Anschlußarmatur mit einer lediglich angedeuteten Werkzeugmaschine verbunden ist,

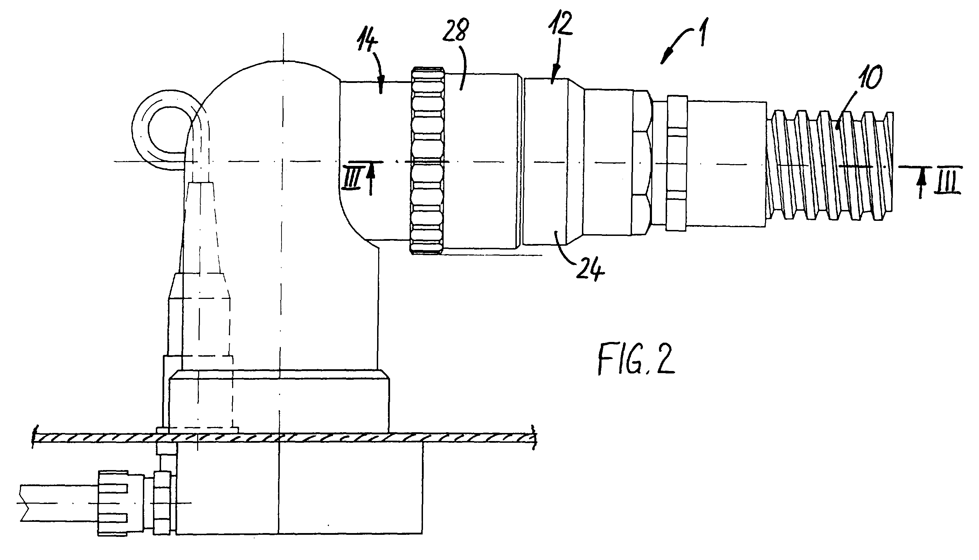

- Fig. 2: eine vergrößerte Ansicht der Anschlußarmatur gemäß der Linie II - II in Fig. 1,
- Fig. 3: einen Längsschnitt durch die erfindungsgemäße Anschlußarmatur in der Schnittebene III - III gemäß Fig. 2, und zwar in einer entkuppelten Darstellung der Kupplungsteile, und
- Fig. 4: eine Stirnansicht des Kupplungssteckerteils in Pfeilrichtung IV gemäß Fig. 3.

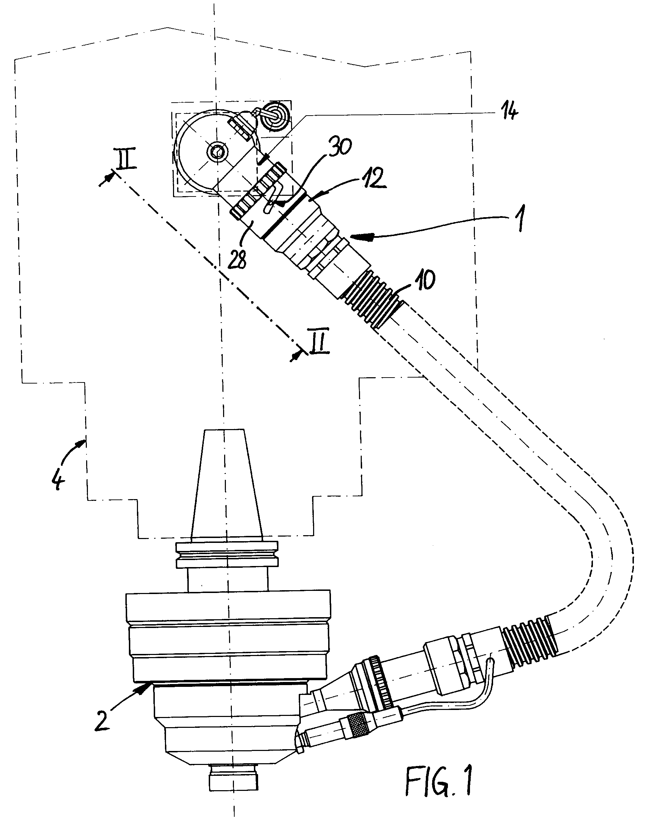

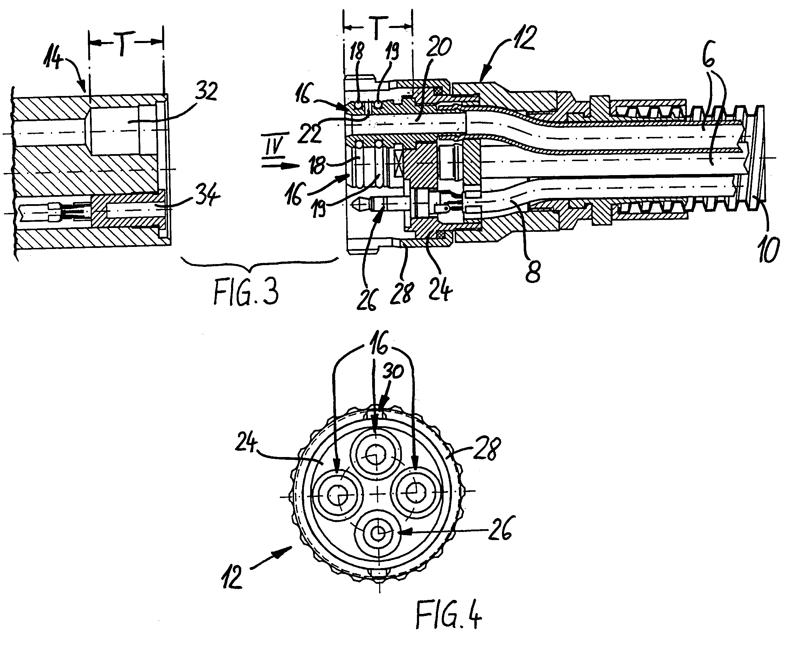

Wie sich zunächst aus Fig. 1 ergibt, dient eine erfindungsgemäße Anschlußarmatur 1 zum Anschluß von Versorgungsleitungen einer Druckluftturbine 2, die ihrerseits als Rotationsantrieb in Verbindung mit einer lediglich durch Strichpunktlinien angedeuteten Werkzeugmaschine 4 dient. Hierzu ist die Druckluftturbine 2 über insbesondere drei Druckluftleitungen 6 sowie vorzugsweise über elektrische Verbindungsleitungen 8 (vgl. hierzu Fig. 3) mit der Werkzeugmaschine 4 verbunden, und zwar über die erfindungsgemäße Anschlußarmatur 1. Die Druckluftleitungen 6 und die elektrischen Verbindungsleitungen 8 sind hierbei von einem Schlauch 10 umschlossen und mit einem Kupplungssteckerteil 12 verbunden, welches seinerseits mit einem Gegenkupplungsteil 14 kuppelbar und in der gekuppelten Stellung arretierbar ist.

Wie sich nun aus Fig. 3 und 4 ergibt, weist das Kupplungssteckerteil 12 erfindungsgemäß mindestens einen Druckluftstecker 16 mit zwei Umfangsdichtungen 18 und 19 auf, wobei diese beiden Umfangsdichtungen 18, 19 innerhalb eines Bereichs einer vorgegebenen Kupplungstiefe T mit einem bestimmten axialen, in Steckrichtung gesehenen Abstandvoneinander angeordnet sind. Hierzu wird insbesondere auf die Darstellung der Fig. 3 verwiesen.

In einer vorteilhaften Ausgestaltung der Erfindung ist vorgesehen, daß von einem durch den Druckluftstecker 16 verlaufenden Druckluftkanal 20 ausgehend mindestens ein im wesentlichen radialer Querkanal 22 abzweigt und dieser Querkanal 22 im axial zwischen den beiden Umfangsdichtungen 18, 19 liegenden Bereich am Außenumfang des Druckluftsteckers 16 mündet. Hierdurch werden die Umfangsdichtungen 18, 19 bei Druckbeaufschlagung der Kupplungsverbindung durch den jeweiligen Druck radial verpreßt, wodurch eine sehr gute, vorteilhafterweise druckabhängige Dichtigkeit erreicht wird.

Zweckmäßigerweise sind die Umfangsdichtungen 18, 19 von elastischen O-Ringen gebildet, die in jeweils einer äußeren Ringnut des Druckluftsteckers 16 sitzen.

Wie sich ferner aus Fig. 3 und 4 ergibt, sind innerhalb eines gemeinsamen Kupplungsgehäuses 24 vorzugsweise drei gleichartige Druckluftstecker 16 angeordnet. Darüber hinaus ist mindestens ein den elektrischen Verbindungsleitungen 8 zugeordnetes elektrisches Steckverbinderteil 26 vorgesehen, das im dargestellten Ausführungsbeispiel vorzugsweise als mehrpoliger, insbesondere dreipoliger Klinkenstecker ausgebildet ist. Die elektrischen Verbindungsleitungen 8 dienen zur Übertragung von drehzahlabhängigen Signalen, die von einem in der Druckluftturbine 2 angeordneten Drehzahlsensor erzeugt und an die Werkzeugmaschine 4 übermittelt werden. Die Druckluftleitungen 6 sind einerseits zwei verschiedenen Drehzahlstufen der Turbine und andererseits einer Turbinenbremse zugeordnet.

Das Kupplungssteckerteil 12 ist in seinem mit dem Gegenkupplungsteil 14 gekuppelten Zustand lösbar arretierbar. Hierzu trägt das Kupplungsgehäuse 24 einen Überwurfring 28, der im dargestellten Ausführungsbeispiel mit dem Gegenkupplungsteil 14 über eine Bajonettverbindung 30 (siehe Fig. 1) arretierbar ist. Alternativ hierzu ist zur Arretierung auch eine Schraubverbindung möglich.

Gemäß Fig. 3 weist das Gegenkupplungsteil 14 für jeden Druckluftstecker 16 eine entsprechende Stecköffnung 32 und für das elektrische Steckverbinderteil 26 einen entsprechenden, wie dargestellt bevorzugt als Klinkenbuchse ausgebildeten Gegenverbinder 34 auf.

Die Erfindung ist nicht auf das dargestellte und beschriebene Ausführungsbeispiel beschränkt, sondern umfaßt auch alle im Sinne der Erfindung gleichwirkenden Ausführungsformen.

## Patentansprüche

1. Anschlußarmatur (1) für Versorgungsleitungen einer - insbesondere als Rotationsantrieb für Werkzeugmaschinen (4) vorgesehenen - Druckluftturbine (2), bestehend aus einem Druckluftleitungen (6) und vorzugsweise elektrische Verbindungsleitungen (8) enthaltenden Schlauch (10) und einem mit diesem endseitig verbundenen Kupplungssteckerteil (12),
**dadurch gekennzeichnet,** daß das Kupplungssteckerteil (12) mindestens einen Druckluftstecker (16) mit zwei axial, in Steckrichtung beabstandeten, im Bereich einer vorgegebenen Kupplungstiefe (T) des Druckluftsteckers (16) angeordneten Umfangsdichtungen (18, 19) aufweist.

2. Anschlußarmatur nach Anspruch 1,
**dadurch gekennzeichnet,** daß von einem durch den Druckluftstecker (16) verlaufenden Druckluftkanal (20) ausgehend mindestens ein Querkanal (22) abzweigt und dieser Querkanal (22) axial zwischen den beiden Umfangsdichtungen (18, 19) am Außenumfang des Druckluftsteckers (16) mündet.

3. Anschlußarmatur nach Anspruch 1 oder 2,
**dadurch gekennzeichnet,** daß die Umfangsdichtungen (18, 19) von in äußeren Ringnuten des Druckluftsteckers (16) sitzenden, elastischen O-Ringen gebildet sind.

4. Anschlußarmatur nach einem der Ansprüche 1 bis 3,
**dadurch gekennzeichnet,** daß innerhalb eines gemeinsamen Kupplungsgehäuses (24) vorzugsweise mindestens zwei, insbesondere drei gleichartige Druckluftstecker (16) angeordnet sind.

5. Anschlußarmatur nach einem der Ansprüche 1 bis 4,
**gekennzeichnet durch** mindestens ein den elektrischen Verbindungsleitungen (8) zugeordnetes elektrisches Steckverbinderteil (26), das vorzugsweise als mehrpoliger Klinkenstecker ausgebildet ist.

6. Anschlußarmatur nach einem der Ansprüche 1 bis 5,
**dadurch gekennzeichnet,** daß das Kupplungssteckerteil (12) in seinem mit einem Gegenkupplungsteil (14) gekuppelten Zustand lösbar arretierbar ist.

7. Anschlußarmatur nach einem der Ansprüche 4 bis 6,
**dadurch gekennzeichnet,** daß das Kupplungsgehäuse (24) einen Überwurfring (28) trägt, der mit dem Gegenkupplungsteil (14) über eine Bajonettverbindung (30) oder eine Schraubverbindung arretierbar ist.

8. Anschlußarmatur nach Anspruch 6 oder 7,
**dadurch gekennzeichnet,** daß das Gegenkupplungsteil (14) für jeden Druckluftstecker (16) eine entsprechende Stecköffnung (32) und gegebenenfalls für jedes elektrische Steckverbinderteil (26) einen entsprechenden Gegenverbinder (34) aufweist.
